# EUROPÄISCHE PATENTSCHRIFT

(11) **EP 2 018 811 B1**
(45) Veröffentlichungstag und Bekanntmachung des Hinweises auf die Patenterteilung: **22.06.2011**
(21) Anmeldenummer: 07014679.0
(22) Anmeldetag: 26.07.2007
(51) Int. Cl.: A23G 1/00, A23G 1/20, A23G 1/21, A23G 3/00, A23G 3/02

(54) **Verfahren sowie Formungsstation zur Formgebung von Süsswarenschalen**
Method and moulding station for moulding confectionery shells
Procédé tout comme station de formage destinés à former des coques de confiseries

(43) Veröffentlichungstag der Anmeldung: 28.01.2009
(73) Patentinhaber: Winkler und Dünnebier Süsswarenmaschinen GmbH, 56579 Rengsdorf (DE)
(72) Erfinder: Scheide, Helmut, 53562 St. Katharinen (DE); Runkel, Rainer, 56579 Rengsdorf, (DE)
(74) Vertreter: Lippert, Hans-Joachim

(56) Entgegenhaltungen:
- EP-A- 0 156 324
- EP-A- 0 566 927
- EP-A- 0 925 720
- EP-A- 1 346 643
- WO-A-02/089595
- WO-A-03/094626
- DE-A1- 3 447 245
- GB-A- 2 405 827

## Beschreibung

Die Erfindung betrifft ein Verfahren zur Formgebung von Süßwarenschalen mittels wenigstens einem Stempelelement und wenigstens einer förderbaren Gießform, in der wenigstens eine Formvertiefung vorgesehen ist, wobei zumindest das Stempelelement und die Gießform mittels einer Bewegungseinrichtung einen Stempelvorgang absolvieren, bei dem eine trennbare Form zusammengefügt wird, und wobei Süßwarenmasse in die Formvertiefung eingefüllt und vor Durchführung des Stempelvorgangs ein schalenartiger Süßwarenkörper mit einem Überschuss Süßwarenmasse vorgeformt wird.

Außerdem betrifft die Erfindung eine Formungsstation zur Formgebung von Süßwarenschalen umfassend wenigstens ein Stempelelement und wenigstens eine förderbare Gießform mit wenigstens einer Formvertiefung in einer Oberseite der Gießform, wobei das Stempelelement und die Gießform zwecks Erzeugung einer trennbaren Form aus einer Ausgangsposition bis in eine Endposition aufeinander zu bewegbar sind, und wobei eine Vorformungseinrichtung zur Vorformung eines schalenartigen Süßwarenkörpers vorgesehen ist, so dass vor Anwendung des Stempelelements ein vorgeformter Süßwarenkörper herstellbar ist.

Ein Verfahren und eine Vorrichtung zur Herstellung von Süßwarenschalen ist aus der WO 02/089595 A1 bekannt. Bei dem bekannten Verfahren wird die fertige Süßwarenschale mit einem Stempelelement geformt, wobei jedoch vor dem Stempelvorgang eine Entgasung der Süßwarenmasse durchgeführt wird. Dadurch werden in der Süßwarenmasse enthaltene unerwünschte Luftbläschen entfernt.

Luftblasen sollen nicht in der Wandung der fertig geformten Süßwarenschale eingeschlossen werden. Luftblasen sind ein unerwünschter Effekt beim Gießen der Süßwarenmasse. Sie können sich schon vor dem Gießvorgang in der Süßwarenmasse gebildet haben oder entstehen durch den Gießvorgang selbst. Aus dem allgemeinen Stand der Technik der EP 0 589 820 A1 ist es bekannt, unmittelbar nach dem Gießen der Süßwarenmasse in die Formvertiefung den Stempelvorgang durchzuführen. Dadurch bleibt keine zeit, Luftblasen zu entfernen, die in der Süßwarenmasse eingeschlossen sind. Die Luftblasen bleiben selbst in der fertigen Süßwarenschale enthalten. Eine Luftblase beeinträchtigt die Festigkeit und macht die Süßwarenschale anfällig für eine Beschädigung. Dort, wo sich eine Luftblase befindet, kann die Süßwarenschale leicht undicht werden. Falls die Süßwarenschale mit einer Füllung versehen wird, besteht Gefahr, dass die Füllung an der undichten Stelle austritt.

Nach der gattungsbildenden Lehre der WO 02/089595 A1 ist vorgesehen, jede Formvertiefung und die in ihr enthaltene fließfähige temperierte Süßwarenmasse während einer bestimmten Rotationsdauer um eine Symmetrieachse in Rotation zu versetzen und auf diese Weise in der Formvertiefung vorzuverteilen. Unter Einwirkung der Zentrifugal- und Gravitationskraft wird im Inneren der Formvertiefung ein Süßwarenkörper mit einer paraboloidförmigen Oberfläche gebildet, wobei die Oberfläche beachtlich größer ist als die ebene Oberfläche der Süßwarenmasse ohne Rotation. Durch diese Maßnahme soll das Entlüften der flüssigen Süßwarenmasse begünstigt werden.

Da jede Formvertiefung in Rotation um ihre eigene Achse versetzt werden muss, ist der konstruktive Aufwand hoch. Es muss eine Antriebsvorrichtung vorgesehen sein, mit der die Rotation erzeugt wird. Der Aufwand erhöht sich, wenn eine Gießform, die mehrere Formvertiefungen aufweist, aufgerüstet werden muss, um jede einzelne Formvertiefung in Rotation um die eigene Achse zu versetzen.

Der Erfindung liegt grundsätzlich das gleiche technische Problem zugrunde, wie im Falle der WO 02/089595 A1, nämlich die möglichst wirkungsvolle Entfernung von Luftbläschen aus der Süßwarenmasse. Es werden weitgehend luftblasenfreie Süßwarenschalen gewünscht. Daher soll ein Verfahren und eine Vorrichtung zur Formgebung von Süßwarenschalen vorgeschlagen werden, wobei die Vorverteilung und Vorformung der Süßwarenmasse vereinfacht ist.

Erfindungsgemäß wir dies verfahrenstechnisch dadurch gelöst, dass die Gießform nahezu vollständig mit Süßwarenmasse gefüllt und anschließend zwecks Vorformung der Süßwarenmasse aus derjenigen Raumlage, in der sie befüllt worden ist, so gewendet wird, dass unter Ausnutzung der Schwerkraft aus der gewendeten Gießform soviel Süßwarenmasse ausgeleert wird, dass an der Oberseite der Formvertiefung wenigstens eine solche Menge teilkristallisierter Süßwarenmasse anhaften gelassen wird, wie für die fertige Süßwarenschale benötigt dass die ausgeleerte Gießform zurückgewendet wird, und dass die fertige Innenkontur der Süßwarenschale durch den Stempelvorgang geformt wird.

Durch die vorgeschlagene Methode der Vorformung entsteht ein teilkristallisierter Süßwarenkörper, der nur durch Adhäsion an der gewendeten Gießform anhaftet. Auf diese Weise wird eine besonders große Oberfläche der noch nicht vollständig erstarrten Süßwarenmasse in der Formvertiefung erreicht und die Entfernung von Luftblasen sehr begünstigt.

Die Menge der Süßwarenmasse, die in der Formvertiefung anhaftet, ist also vorzugsweise größer als die für die fertige Süßwarenschale benötigte Menge.

Mit dem anschließenden Stempelvorgang wird die teilkristallisierte Süßwarenmasse dann in die exakte Gestalt geformt.

Die gewendete Gießform kann zwecks Ausleerung überschüssiger Süßwarenmasse in eine Schleuderbewegung versetzt werden.

Die Menge der anhaftenden Süßwarenmasse ist beeinflussbar durch die Bewegungsbahn der Schleuderbewegung. Außerdem wird die anhaftende Menge der Süßwarenmasse beeinflusst durch die Frequenz und gegebenenfalls die Amplitude der Schleuderbewegung sowie durch die Temperatur der Gießform und der umgebenden Atmosphäre.

Die Schleuderbewegung kann in einer Ebene auf einer Kreisbahn ausgeführt werden. Zusätzlich kann eine horizontale Schwingbewegung und gegebenenfalls des weiteren eine vertikale Schwingbewegung überlagert werden. Zur Erzeugung jeder dieser Schwingbewegungen kann beispielsweise ein Unwuchtmotor vorgesehen sein. Vorzugsweise sind die mit dem Unwuchtmotor erzeugbaren Beschleunigungskräfte durch Verstellung einer Unwuchtmasse variabel.

Die in der Formvertiefung befindliche Süßwarenmasse wird vorzugsweise vor ihrer teilweisen Ausleerung entgast.

Günstigerweise wird beim Stempelvorgang der überschüssige Teil der Süßwarenmasse aus der Form hinausgedrängt. So wird gewährleistet, dass für die vollständige Füllung der Süßwarenschale stets genügend Süßwarenmasse vorhanden ist.

Der überschüssige Teil der Süßwarenmasse wird zweckmäßig von dem Schalenrand der Süßwarenschale weg bis auf die die Formvertiefung umgebende Oberseite der Gießform befördert und der aus der Formvertiefung beförderte Teil der Süßwarenmasse wird von der innerhalb der Form vorhandenen Süßwarenmasse getrennt. Weil kein Kontakt mehr zwischen der nach außen beförderten Süßwarenmasse und der Süßwarenmasse in der Formvertiefung besteht, kann der überschüssige Teil der Süßwarenmasse von der Oberseite der Gießform ohne Einfluss auf die Süßwarenschale beseitigt werden. Die überschüssige Süßwarenmasse kann beispielsweise einfach über die Oberseite der Gießform geschoben werden.

Alternativ kann vorgesehen sein, dass der überschüssige Teil der Süßwarenmasse von dem Schalenrand der Süßwarenschale weg bis auf die die Formvertiefung umgebende Oberseite der Gießform befördert wird, wobei jedoch ein Verbindungssteg zwischen der hinausgedrängten und der innerhalb der Form vorhandenen Süßwarenmasse erzeugt wird. Vorteilhaft daran ist, dass die erstarrende überschüssige Süßwarenmasse durch den Verbindungssteg gehalten wird, wenn sie durch eine Abtragseinrichtung von der Oberseite der Gießform entfernt werden soll. Der Verbindungssteg ist so ausgebildet, dass er abreißen kann, jedoch noch einen gewissen Widerstand gegen Verrutschen der Süßwarenmasse vorhanden ist, so dass die Süßwarenmasse von einer Abtragseinrichtung besser aufgenommen werden kann, weil sie nicht vor der Abtragseinrichtung hergeschoben wird. Bei einer Gießform mit mehreren Formvertiefungen könnten andernfalls Bruchstücke der erstarrenden Süßwarenmasse in eine andere Formvertiefung hineinfallen, wenn sie vor der Abtragseinrichtung hergeschoben werden.

Ein weiterer Nutzen wird darin gesehen, dass die Süßwarenschale so geformt wird, dass ihr Schalenrand eine nach innen gerichtete Kantenbrechung erhält. Die Kantenbrechung kann wie eine Fase oder eine Rundung gestaltet sein oder eine sonstige geeignete Geometrie aufweisen. Die Kantenbrechung begünstigt die spätere Anbringung eines Deckels aus Süßwarenmasse, der im Bereich der Kantenbrechung mit der Süßwarenschale verbunden wird, in dem beispielsweise die zu verbindenden Bereiche miteinander verschmolzen werden.

Der von der Oberseite der Gießform beseitigte Teil der Süßwarenmasse kann in eine zur Herstellung der Süßwarenmasse vorgesehene Anlage zurückbefördert werden. Sie kann dekristallisiert und dann dem Verarbeitungsprozess erneut zugeführt werden.

Der auf die Oberseite der Gießform gedrängte Teil der Süßwarenmasse wird vorzugsweise dadurch von der Gießform abgetragen, dass eine Ableckwalze über die Oberseite der Gießform rotiert, wobei die Süßwarenmasse an der rotierenden Ableckwalze haften bleibt und die anhaftende Süßwarenmasse anschließend von der rotierenden Ableckwalze abgelöst wird.

Die Süßwarenmasse, die durch den Vorgang der Ausleerung an der Oberseite der Gießform haften bleibt, kann beseitigt werden bevor der Stempelvorgang ausgeführt wird.

Das zugrundegelegte technische Problem wird außerdem durch eine Formungsstation gelöst, die dadurch gekennzeichnet ist, dass die Vorformungseinrichtung mit einer Wendeeinrichtung versehen ist, dass die Gießform mittels dieser Wendeeinrichtung aus derjenigen Raumlage, in der sie befüllbar ist, so zu wenden ist, dass ein Teil der Süßwarenmasse unter Ausnutzung der Schwerkraft aus der gewendeten Gießform ausleerbar ist, und dass eine Rückwendeeinrichtung vorgesehen ist, mit der die ausgeleerte Gießform zurückwendbar ist.

Durch die Kombination der Stempeltechnik mit der Technik der Vorformung eines Süßwarenkörpers durch Anhaftung teilkristallisierter Süßwarenmasse in der Formvertiefung, wird eine Süßwarenschale erzeugt, die nahezu frei von Luftblasen ist. Die hierfür eingesetzte Vorrichtungstechnik ist wesentlich einfacher als beim gattungsbildenden Stand der Technik, bei dem in jeder einzelnen Formvertiefung mit hohem Vorrichtungsaufwand eine durch Rotation erzeugte paraboloidförmige Oberfläche der Süßwarenmasse erzeugt werden muss.

Es kann eine Schleudereinrichtung vorgesehen sein, mit der die gewendete Gießform zwecks Ausleerung überschüssiger Süßwarenmasse in eine Schleuderbewegung versetzbar ist. Die Menge der anhaftenden Süßwarenmasse kann durch die Schleuderbewegung beeinflusst werden, indem beispielsweise deren Frequenz verändert wird. Die Schleudereinrichtung kann einen Exzenterantrieb aufweisen, dessen Exzentrizität beispielsweise in einem Bereich vom 0 bis 10 mm eingestellt werden kann. Die Schleuderfrequenz kann beispielsweise in einem Bereich vom 0 bis 100 Hertz eingestellt werden.

Es kann eine Entgasungseinrichtung vorgesehen sein, mit der die in der Formvertiefung befindliche Süßwarenmasse vor der teilweisen Ausleerung entgasbar ist. Auf diese Weise werden Luftblasen vor der Vorformung entfernt, während sich die Süßwarenmasse noch im schmelzflüssigen Zustand befindet.

Die Entgasungseinrichtung weist vorzugsweise einen Entgasungsrüttler auf. Mit diesem können Schwingungen, beispielsweise durch körperliche Übertragung in die Gießform eingeleitet werden.

Das Stempelelement kann mit einer Abtrenneinrichtung versehen sein, mit der überschüssige Süßwarenmasse während des Stempelvorgangs von der für die fertige Süßwarenschale in der Form benötigten Menge der Süßwarenmasse abtrennbar ist.

Die Abtrenneinrichtung weist einfacherweise eine an dem Stempelelement vorgesehene Abtrennkante auf.

Das Stempelelement ist, um einen weiteren Nutzen zu haben, mit einer Kantenformungsfläche versehen, mit der am Schalenrand der Süßwarenschale eine zum Inneren der Süßwarenschale gerichtete Kantenbrechung erzeugbar ist. Die Kantenbrechung der fertigen Süßwarenschale begünstigt die spätere Anbringung eines Deckel aus Süßwarenmasse, wie bereits oben erwähnt.

Einfacherweise ist in der Endposition von Stempelelement und

Gießform zwischen dem Rand der Formvertiefung und der Kantenformungsfläche ein Spalt vorgesehen. Durch den Spalt kann bis zum Erreichen der Endposition von Stempelelement und Gießform während des Stempelvorgangs Süßwarenmasse aus der Form hinausgedrängt werden. In der Endposition formt der Spalt einen Verbindungssteg zwischen der fertig geformten Süßwarenschale und dem aus der Form gedrängten überschüssigen Teil der Süßwarenmasse.

Weiterhin nutzbringend ist es, wenn eine Abtragseinrichtung vorgesehen ist, mit der überschüssige Süßwarenmasse, die auf die Oberseite der Gießform gelangt ist, von dort entfernbar ist. Weil während der Vorformung Süßwarenmasse durch das teilweise Ausleeren auf die flache Oberseite der Gießform gelangt, ist es günstig, wenn die Süßwarenmasse mit der Abtragseinrichtung wieder beseitigt werden kann. Dasselbe gilt für Süßwarenmasse, die durch den Stempelvorgang auf die flache Oberseite der Gießform gedrängt wird. Auch diese kann mit der Abtragseinrichtung beseitigt werden. In Durchlaufrichtung der Gießformen kann vor und hinter der Stempelstation eine Abtragseinrichtung vorgesehen sein. Zumindest ist jedoch in Durchlaufrichtung hinter der Stempelstation eine Abtragseinrichtung vorgesehen. Diese entfernt dann sowohl die während der Vorformung als auch die durch den Stempelvorgang auf die Oberseite der Gießform gelangte Süßwarenmasse.

Die Abtragseinrichtung weist zweckmäßig eine Ableckwalze auf. Die Ableckwalze rotiert gegenläufig über die Oberseite der Gießform, wobei die Süßwarenmasse an der rotierenden Ableckwalze haften bleibt und die anhaftende Süßwarenmasse anschließend von der rotierenden Ableckwalze abgelöst wird.

Die Ableckwalze ist vorzugsweise temperiert. Süßwarenmasse, die an der Oberseite der Gießform zu erstarren beginnt, wird wieder weich, wenn sie die Walzenoberfläche berührt. Sie haftet an der Walzenoberfläche an und wird von der Gießform entfernt. An einer der Gießform abgewandten Stelle ist ein Abstreicher vorgesehen. Der Abstreicher ist an die Ableckwalze angestellt und entfernt die Süßwarenmasse von der Ableckwalze. Dadurch kann die Ableckwalze bei der folgenden Umdrehung wieder neue Süßwarenmasse von der Oberseite der Gießform ablecken. Die Temperierung der Ableckwalze erfolgt beispielsweise mit warmem Wasser, das durch das Innere der Ableckwalze hindurchgeleitet wird.

Nachfolgend ist die Erfindung beispielhaft erläutert und anhand der schematischen Zeichnung beschrieben. Es zeigen:
- Fig. 1: eine Gießform, die eine Formvertiefung aufweist mit- eingefüllter Süßwarenmasse,
- Fig. 2: eine Vorformungseinrichtung mit einer darin befind- lichen Gießform gemäß Fig. 1, die zwecks Ausleerung von Süßwarenmasse gewendet ist,
- Fig. 3: die Vorformungseinrichtung gemäß Fig. 2 mit der Gießform gemäß Fig. 2 im ausgeleerten Zustand mit anhaftender Süßwarenmasse,
- Fig. 4: die Gießform gemäß Fig. 3 zurückgewendet und eine Ableckwalze an der Oberseite der Gießform,
- Fig. 5: die Gießform gemäß Fig. 4 und ein Stempelelement,
- Fig. 6: das Stempelelement gemäß Fig. 5 während des Stempel- vorgangs,
- Fig. 7: das Stempelelement gemäß Fig. 5 in der Endposition mit fertig geformter Süßwarenschale,
- Fig. 8: die fertig geformte Süßwarenschale in der Formver- tiefung der Gießform,
- Fig. 9: die Gießform gemäß Fig. 8 mit fertiger Süßwarenscha- le und Ableckwalze an der Oberseite,
- Fig. 10: eine alternative Ausführung mit geändertem Stempel- element in der Endposition mit fertig geformter Süß- warenschale,
- Fig. 11: ein vergrößerter Ausschnitt gemäß XI in Fig. 10,
- Fig. 12: die Süßwarenschale und Gießform gemäß Fig. 11 mit Ableckwalze an der Oberseite der Gießform,
- Fig. 13: ein vergrößerter Ausschnitt gemäß XIII in Fig. 12.

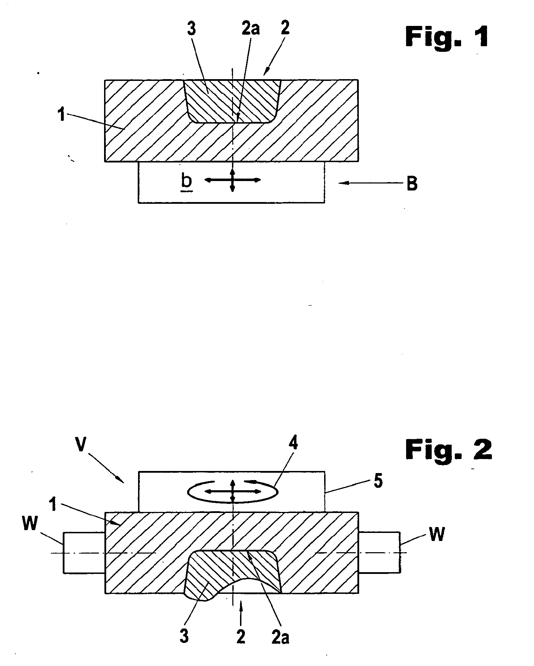

In Fig. 1 der Zeichnung ist schematisch eine Gießform 1 dargestellt, die eine Formvertiefung 2 aufweist. In der Formvertiefung 2 ist Süßwarenmasse 3 eingefüllt, wobei das Volumen der Formvertiefung 2 nahezu vollständig gefüllt ist. In der Praxis ist eine Gießform, wie sie für die industrielle Produktion von Süßwarenartikeln verwendet wird, in der Regel mit mehreren Formvertiefungen versehen. Die abgebildete Gießform 1 mit der einzelnen Formvertiefung 2 dient zur prinzipiellen Erläuterung der Erfindung. Weiterhin ist in Fig. 1 eine Entgasungseinrichtung B dargestellt, die einen Entgasungsrüttler b aufweist. Mit der Entgasungseinrichtung B wird eine Rüttelbewegung über die Gießform 1 in die Süßwarenmasse 3 übertragen und auf diese Weise Luftblasen an die Oberfläche der schmelzflüssigen Süßwarenmasse 3 befördert, um eine möglicht luftblasenfreie Süßwarenmasse zu erhalten.

Fig. 2 zeigt die Gießform 1 in einer vorformungseinrichtung V. Die vorformungseinrichtung V weist eine Wendeeinrichtung W auf, mit der die Gießform 1 gewendet worden ist. Die Formvertiefung 2 mit der darin enthaltenen entgasten Süßwarenmasse 3 weist nach unten, so dass ein Teil der Süßwarenmasse 3 unter Ausnutzung der Schwerkraft aus der Formvertiefung 2 ausgeleert wird. Ein anderer Teil der Süßwarenmasse 3 bleibt durch Adhäsion an der Innenwand 2a, nämlich der Oberfläche der Formvertiefung 2 haften.

Der in Figur 2 dargestellte Verfahrensschritt kann durch eine Schleuderbewegung unterstützt werden, wie durch den über der Grießform 1 dargestellten Pfeil 4 angedeutet. Zur Übertragung der Schleuderbewegung in die Gießform 1 ist eine Schleudereinrichtung 5 vorgesehen. Wenn die auszuleerende Süßwarenmasse 3 entfernt ist und nur noch ein Rest Süßwarenmasse 3 an der Formvertiefung anhaftet, erfolgt während der Schleuderbewegung eine weitere Entgasung. Eventuell vorhandene Luftblasen haben nur noch einen sehr kurzen Weg, um an die Oberfläche der anhaftenden Süßwarenmasse zu gelangen und zu entweichen. Auf diese Weise wird eine sehr effektive Entgasung erreicht.

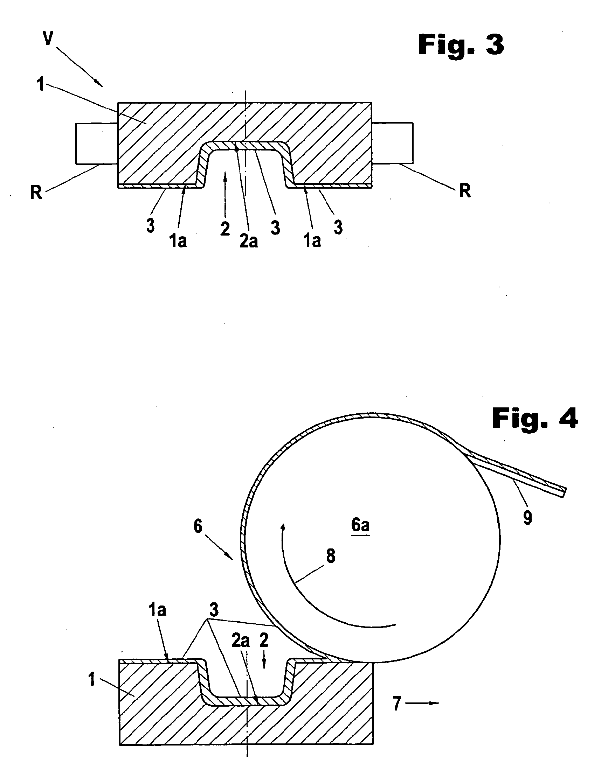

Figur 3 zeigt ebenfalls die Vorformungsstation V. Die Gießform 1 befindet sich noch in der Position, in die sie von der Wendeeinrichtung W gewendet wurde. Sie ist gemäß Fig. 3 jedoch schon mit einer Rückwendeeinrichtung R in Kontakt. An der Innenwand 2a der Formvertiefung 2 haftet teilkristallisierte Süßwarenmasse 3 an. Eine den Rand der Formvertiefung 2 umgebende Oberseite 1a der Gießform 1 ist mit einer Schicht Süßwarenmasse 3 benetzt, die während der Ausleerung an die Oberseite 1a der Gießform 1 gelangt ist. Die an der Innenwand 2a der Formvertiefung 2 anhaftende Menge der Süßwarenmasse 3 bildet einen vorgeformten Süßwarenkörper 10. Der Süßwarenkörper 10 weist mehr Süßwarenmasse 3 auf, als für die fertige Süßwarenschale benötigt wird. Die Gießform 1 wird mittels der Rückwendeeinrichtung R anschließend zurückgewendet, in die in Figur 4 gezeigte Lage.

Figur 4 zeigt darüber hinaus eine Abtragseinrichtung 6 mit einer Ableckwalze 6a, mittels der die an der Oberseite 1a der Gießform 1 anhaftende Süßwarenmasse 3 entfernt wird. Die Ableckwalze 6a ist temperiert, damit sie die auf der Gießform 1 erstarrende Süßwarenmasse 3b wieder schmelzen und im geschmolzenen Zustand ablecken kann. Mit einem Pfeil ist die Transportrichtung 7 der Gießform 1 angedeutet. Auf der Ableckwalze 6a ist die Rotationsbewegung der Ableckwalze 6a mit einem Pfeil 8 dargestellt. An der Oberseite 1a der Gießform 1 erfolgt die Rotationsbewegung 8 der Ableckwalze 6a gegenläufig zur Transportrichtung 7 der Gießform 1. An der Ableckwalze 6a haftet Süßwarenmasse 3 an, die von der Gießform 1 entfernt wird. An einer der Oberseite 1a der Gießform 1 abgewandten Stelle ist ein Abstreicher 9 an die Ableckwalze 6a angestellt. Der Abstreicher 9 entfernt die Süßwarenmasse 3 von der Walzenoberfläche 6b der Ableckwalze 6a. Die so aufgenommene Süßwarenmasse 3 wird in den Verarbeitungsprozess zurückgeführt und einer Gießmaschine zugeleitet.

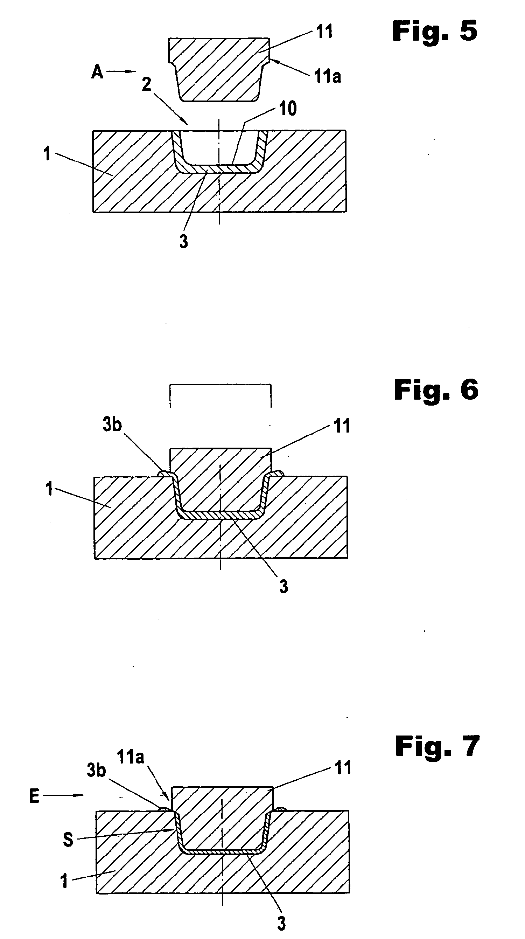

Figur 5 zeigt die Gießform 1 gemäß Figur 4 mit einer vollständig von Süßwarenmasse 3 befreiten Oberseite 1a der Gießform 1. In der Formvertiefung 2 befindet sich der vorgeformte Süßwarenkörper 10. Außerdem ist ein Stempelelement 11 dargestellt. Das Stempelelement 11 und die Gießform 1 befinden sich relativ zueinander in einer Ausgangsposition A für einen Stempelvorgang. Das Stempelelement 11 weist eine Abtrennkante 11a auf, mit der überschüssige Süßwarenmasse 3 aus der Formvertiefung herausbefördert und am Ende des Stempelvorgangs abgetrennt wird von der die Süßwarenschale bildenden Süßwarenmasse 3.

In Figur 6 sind das Stempelelement 11 und die Gießform (1) ein Stück weit aufeinander zu bewegt. Die Formung der Süßwarenschale ist im Gange, jedoch noch nicht abgeschlossen. Eine Überschussmenge 3b der Süßwarenmasse 3 ist an der Abtrennkante 11a des Stempelelements 11 vorbei am Rand der Formvertiefung 2 aus der Form gedrängt worden und liegt auf der flachen Oberseite 1a der Gießform 1.

Die relative Endposition E für Stempelelement 11 und Gießform 1 ist in Figur 7 dargestellt. Die Gießform 1 und das Stempelelement 11 bilden eine geschlossene Form, welche die fertige Kontur der Außenseite und der Innenseite der Süßwarenschale S formt. Die Überschussmenge 3b der Süßwarenmasse 3 ist aus der Form hinaus gedrängt und abgetrennt worden von der Süßwarenschale S. Die Oberseite der Gießform 1 weist eine flache glatte Oberfläche auf, damit die Überschussmenge 3b nicht fest anhaften und gut entfernt werden kann.

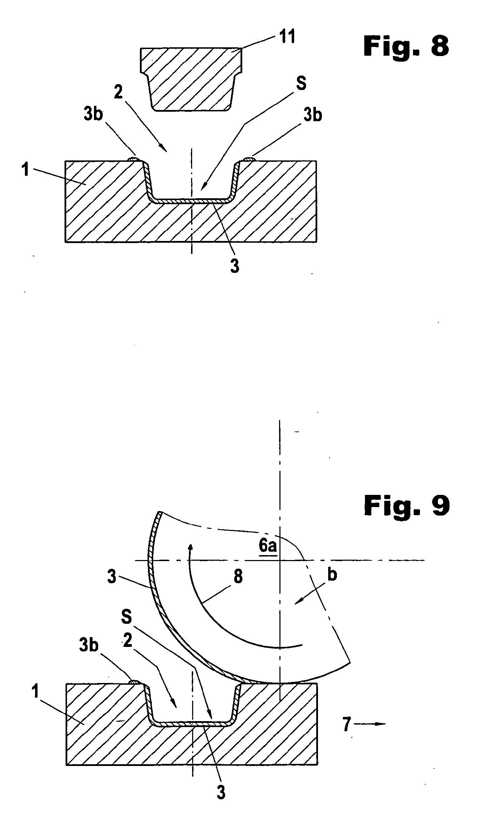

Figur 8 zeigt die fertige Süßwarenschale S in der Formvertiefung 2 der Gießform 1, wobei das Stempelelement 11 und die Gießform 1 auseinander bewegt worden sind. Die Überschussmenge 3b der Süßwarenmasse 3 liegt auf der Oberseite 1a der Gießform 1 und hat keinen Kontakt mehr zur Süßwarenschale S.

Gemäß Figur 9 wird die Überschussmenge 3b der Süßwarenmasse 3 mit einer weiteren Ableckwalze 6a aufgenommen und von der Oberseite 1a der Gießform 1 entfernt. Dabei kann die Überschussmenge 3b der Süßwarenmasse 3 auf der glatten Oberseite der Gießform leicht rutschen, wenn von der Ableckwalze 6a eine Schubkraft eingeleitet wird.

Die Ableckwalze 6a hat im Übrigen den gleichen Aufbau und die gleiche Funktion wie die Ableckwalze 6a gemäß Figur 4. Es kann sich um dieselbe Ableckwalze 6a handeln oder es ist eine zusätzliche Ableckwalze 6a vorgesehen.

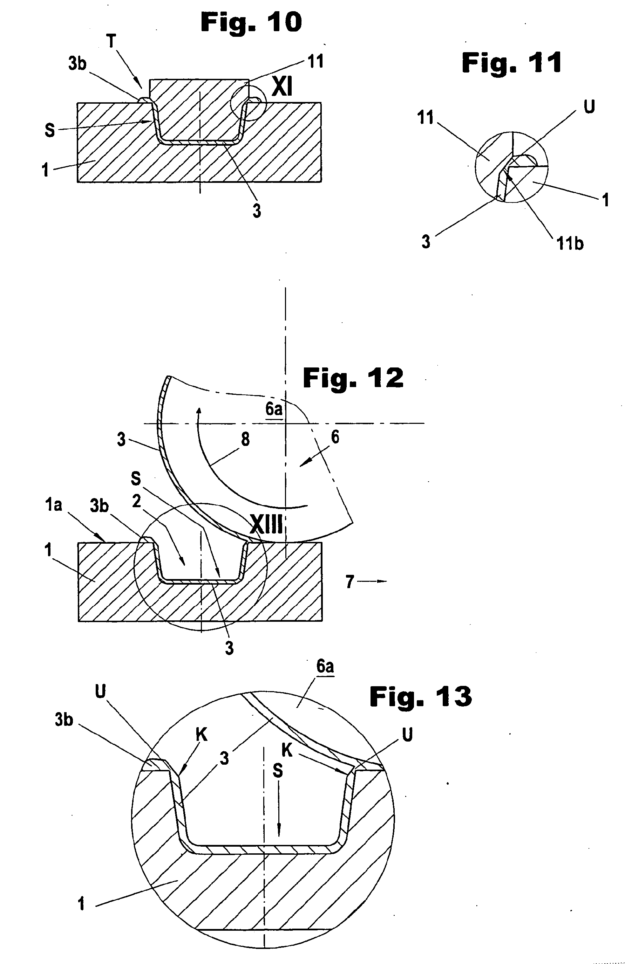

In Fig. 10 ist eine alternative Ausführung einer Formungsstation gezeigt, deren Stempelelement 11 eine andere Ausbildung aufweist, als das Stempelelement gemäß Fig. 7. Das Stempelelement 11 ist nämlich so ausgebildet, dass in der in Fig. 10 gezeigten Endposition E am Schalenrand der Süßwarenschale S ein Spalt T verbleibt. In dem Spalt T ist ein Verbindungssteg U aus Süßwarenmasse 3 gebildet. Der Verbindungssteg U verbindet die Süßwarenschale 3 mit der aus der Form gedrängten Überschussmenge 3b der Süßwarenmasse 3. Fig. 11 zeigt eine ausschnittsweise Vergrößerung gemäß XI in Fig. 10. Darin ist der Spalt T dargestellt und der in dem Spalt T gebildete Verbindungssteg U aus Süßwarenmasse 3. Darüber hinaus ist an dem Stempelelement 11 eine Kantenformungsfläche 11b vorgesehen, mit der die Süßwarenschale S so geformt wird, dass ihr Schalenrand eine nach innen gerichtete Kantenbrechung K erhält, wie am besten in Fig. 11 zu sehen. Die Kantenbrechung K begünstigt die spätere Anbringung eines aus Süßwarenmasse 3 bestehenden Deckels, der eine zuvor eingebrachte Füllung verschließt. Der Bereich der Kantenbrechung K kann beispielsweise erneut erwärmt werden, so dass die Oberfläche der Kantenbrechung K geschmolzen ist. Der Deckel wird dann dazu gegossen und verschmilzt mit dem Schalenrand der Süßwarenschale S.

Eine gleichwirkende Kantenformungsfläche ist auch in dem Ausführungsbeispiel gemäß der Figuren 5 bis 7 vorgesehen, so dass die fertige Süßwarenschale S gemäß Fig. 7 an ihrem Schalenrand ebenfalls eine Kantenbrechung aufweist, die zum Inneren der Süßwarenschale gerichtet ist, und welche die Anbringung eines Deckels aus Süßwarenmasse begünstigt.

Fig. 12 zeigt die Süßwarenschale S gemäß Fig. 10. Die Süßwarenschale S sowie der Verbindungssteg U und die Überschussmenge 3b sind einstückig miteinander ausgebildet. Daher kann die Überschussmenge 3b der Süßwarenmasse 3 auf der glatten flachen Oberseite 1a der Gießform 1 nicht einfach wegrutschen. Es ist eine temperierte Ableckwalze 6a vorgesehen, die der in Fig. 9 gezeigten entspricht. Die Ableckwalze 6a rotiert gegenläufig über die Oberseite 1a der Gießform 1. Sie übt dabei eine Schubkraft gegen die erstarrende Überschussmenge 3b der Süßwarenmasse 3 aus. Die Überschussmenge 3b ist durch den Verbindungssteg U abgestützt und daran gehindert, auf der glatten Oberseite 1a der Gießform 1 einfach weg zu rutschen. Durch diese Maßnahme gelingt es besser, die Ableckwalze 6a gegen die abgestützte Überschussmenge 3b zu schieben und effektiver Wärme von der Ableckwalze 6a in die Überschussmenge 3b der Süßwarenmasse 3 zu übertragen, um diese zu schmelzen und abzulecken.

Fig. 13 zeigt eine ausschnittsweise Vergrößerung gemäß XIII in Fig. 12. Es ist der Verbindungssteg U und die Kantenbrechung K zu sehen. Außerdem ist die Ableckwalze 6a, welche geschmolzene Süßwarenmasse 3 ableckt.

### Bezugszeichenliste

- 1: Gießform
- 2: Formvertiefung
- 2a: Oberfläche/Innenwandung
- 3: Süßwarenmasse
- 4: Schleuderbewegung
- 5: Schleudereinrichtung
- 6: Abtragseinrichtung
- 6a: Ableckwalze
- 6b: Walzenoberfläche
- 7: Transportrichtung (Gießform)
- 8: Rotationsbewegung
- 9: Abstreicher
- 10: vorgeformter Süßwarenkörper
- 11: Stempelelement
- 11a: Abtrennkante
- 11b: Kantenformungsfläche
- A: Ausgangsposition
- B: Entgasungseinrichtung
- b: Entgasungsrüttler
- E: Endposition
- K: Kantenbrechung
- R: Rückwendeeinrichtung
- S: Süßwarenschale
- T: Spalt
- U: Verbindungssteg
- V: Vorformungseinrichtung
- W: Wendeeinrichtung

## Patentansprüche

1. Verfahren zur Formgebung von Süßwarenschalen (S) mittels wenigstens einem Stempelelement (11) und wenigstens einer förderbaren Gießform (1), in der wenigstens eine Formvertiefung (2) vorgesehen ist, wobei zumindest das Stempelelement (11) und die Gießform (1) mittels einer Bewegungseinrichtung einen Stempelvorgang absolvieren, bei dem eine trennbare Form zusammengefügt wird, und wobei Süßwarenmasse (3) in die Formvertiefung (2) eingefüllt und vor Durchführung des Stempelvorgangs ein schalenartiger Süßwarenkörper (10) mit einem Überschuss Süßwarenmasse (3) vorgeformt wird, **dadurch gekennzeichnet, dass** die Gießform (1) nahezu vollständig mit Süßwarenmasse (3) gefüllt und anschließend zwecks Vorformung der Süßwarenmasse (3) aus derjenigen Raumlage, in der sie befüllt worden ist, so gewendet wird, dass unter Ausnutzung der Schwerkraft aus der gewendeten Gießform (1) soviel Süßwarenmasse (3) ausgeleert wird, dass an der Oberfläche (2a) der Formvertiefung (2) wenigstens eine solche Menge teilkristallisierter Süßwarenmasse (3) anhaften gelassen wird, wie für die fertige Süßwarenschale (S) benötigt, dass die ausgeleerte Gießform (1) zurückgewendet wird, und dass die fertige Innenkontur der Süßwarenschalen (S) durch den Stempelvorgang geformt wird.

2. Verfahren nach Anspruch 1, **dadurch gekennzeichnet, dass** die gewendete Gießform (1) zwecks Ausleerung überschüssiger Süßwarenmasse (3) in eine Schleuderbewegung versetzt wird.

3. Verfahren nach Anspruch 1 oder 2, **dadurch gekennzeichnet, dass** die Schleuderbewegung in einer Ebene auf einer Kreisbahn ausgeführt wird.

4. Verfahren nach einem der Ansprüche 1 bis 3, **dadurch gekennzeichnet, dass** die in der Formvertiefung (2) befindliche Süßwarenmasse (3) vor ihrer Ausleerung entgast wird.

5. Verfahren nach einem der Ansprüche 1 bis 4, **dadurch gekennzeichnet, dass** beim Stempelvorgang ein überschüssiger Teil der Süßwarenmasse (3) aus der Form hinausgedrängt wird.

6. Verfahren nach Anspruch 5 **dadurch gekennzeichnet, dass** der überschüssige Teil der Süßwarenmasse (3) von dem Schalenrand der Süßwarenschale (S) weg bis auf die die Formvertiefung (2) umgebende Oberseite (1a) der Gießform (1) befördert wird, und dass der aus der Formvertiefung (2) beförderte Teil der Süßwarenmasse (3) getrennt wird von der innerhalb der Form vorhandenen Süßwarenmasse (3).

7. Verfahren nach Anspruch 5 **dadurch gekennzeichnet, dass** der überschüssige Teil der Süßwarenmasse (3) von dem Schalenrand der Süßwarenschale (S) weg bis auf die die Formvertiefung (2) umgebende Oberseite (1a) der Gießform (1) befördert wird, und dass ein Verbindungssteg (U) zwischen der hinausgedrängten und der innerhalb der Form vorhandenen Süßwarenmasse (3) erzeugt wird.

8. Verfahren nach einem der Ansprüche 1 bis 7 **dadurch gekennzeichnet, dass** die Süßwarenschale (S) so geformt wird, dass ihr Schalenrand eine nach innen gerichtete Kantenbrechung (K) erhält.

9. Verfahren nach einem der Ansprüche 6 bis 8, **dadurch gekennzeichnet , dass** der überschüssige Teil der Süßwarenmasse (3) von der Oberseite (1a) der Gießform (1) beseitigt wird.

10. Verfahren nach Anspruch 9, **dadurch gekennzeichnet, dass** der von der Oberseite (1a) der Gießform (1) beseitigte Teil der Süßwarenmasse (3) zurückbefördert wird in eine zur Herstellung der Süßwarenmasse vorgesehene Anlage.

11. Verfahren nach Anspruch 9 oder 10, **dadurch gekennzeichnet, dass** der auf die Oberseite (1a) der Gießform (1) gedrängte Teil der Süßwarenmasse (3) abgetragen wird, indem eine Ableckwalze (6) über die Oberseite (1a) der Gießform (1) rotiert, dass die Süßwarenmasse (3) an der rotierenden Ableckwalze (6) haften bleibt, und dass die anhaftende Süßwarenmasse (3) von der rotierenden Ableckwalze (6) abgelöst wird.

12. Verfahren nach einem der Ansprüche 9 bis 11, **dadurch gekennzeichnet, dass** Süßwarenmasse (3), die durch den Vorgang der Ausleerung an der Oberseite (1a) der Gießform (1) haften bleibt, beseitigt wird, bevor der Stempelvorgang ausgeführt wird.

13. Formungsstation zur Formgebung von Süßwarenschalen (S) umfassend wenigstens ein Stempelelement (11) und wenigstens eine förderbare Gießform (1) mit einer Oberseite (1a), in der wenigstens eine Formvertiefung (2) vorgesehen ist, wobei das Stempelelement (11) und die Gießform (1) zwecks Erzeugung einer trennbaren Form aus einer Ausgangsposition (A) bis in eine Endposition (E) aufeinander zu bewegbar sind, und wobei eine Vorformungseinrichtung (V) zur Vorformung eines schalenartigen Süßwarenkörpers vorgesehen ist, so dass vor Anwendung des Stempelelements (11) ein vorgeformter Süßwarenkörper (10) herstellbar ist, **dadurch gekennzeichnet, dass** die Vorformungseinrichtung (V) mit einer Wendeeinrichtung (W) versehen ist, dass die Gießform (1) mit der Wendeeinrichtung (W) aus derjenigen Raumlage, in der sie befüllbar ist, so zu wenden ist, dass ein Teil der Süßwarenmasse (3) unter Ausnutzung der Schwerkraft aus der gewendeten Gießform (1) ausleerbar ist, und dass eine Rückwendeeinrichtung (R) vorgesehen ist, mit der die ausgeleerte Gießform (1) zurückwendbar ist.

14. Formungsstation nach Anspruch 13, **dadurch gekennzeichnen**, dass eine Schleudereinrichtung (5) vorgesehen ist, mit der die gewendete Gießform (1) zwecks Ausleerung überschüssiger Süßwarenmasse (3) in eine Schleuderbewegung versetzbar ist.

15. Formungsstation nach Anspruch 13 oder 14, **dadurch gekennzeichnet, dass** eine Entgasungseinrichtung (B) vorgesehen ist, mit der die in der Formvertiefung (2) befindliche Süßwarenmasse (3) vor der teilweisen Ausleerung entgasbar ist.

16. Formungsstation nach Anspruch 15, **dadurch gekennzeichnet, dass** die Entgasungseinrichtung (B) einen Entgasungsrüttler (b) aufweist.

17. Formungsstation nach einem der Ansprüche 13 bis 16, **dadurch gekennzeichnet, dass** das Stempelelement (11) mit einer Abtrenneinrichtung versehen ist, mit der überschüssige Süßwarenmasse (3) während des Stempelvorgangs abtrennbar ist von der für die fertige Süßwarenschale in der Form benötigten Menge der Süßwarenmasse (3).

18. Formungsstation nach Anspruch 17, **dadurch gekennzeichnet, dass** die Abtrenneinrichtung eine an dem Stempelelement vorgesehene Abtrennkante (11a) aufweist.

19. Formungsstation nach einem der Ansprüche 13 bis 18, **dadurch gekennzeichnet, dass** das Stempelelement (11) mit einer Kantenformungsfläche versehen ist, mit der am Schalenrand der Süßwarenschale eine zum Inneren der Süßwarenschale gerichtete Kantenbrechung erzeugbar ist.

20. Formungsstation nach Anspruch 19, **dadurch gekennzeichnet, dass** in der Endposition (E) von Stempelelement (11) und Gießform (1) zwischen dem Rand der Formvertiefung (2) und der Kantenformungsfläche ein Spalt vorgesehen ist.

21. Formungsstation nach einem der Ansprüche 13 bis 20, **dadurch gekennzeichnet, dass** eine Abtragseinrichtung (6) vorgesehen ist, mit der überschüssige Süßwarenmasse (3), die auf die Oberseite (1a) der Gießform (1) gelangt ist, von dort entfernbar ist.

22. Formungsstation nach Anspruch 21, **dadurch gekennzeichnet, dass** die Abtragseinrichtung (6) eine Ableckwalze (6a) aufweist.

## Claims

1. Method for moulding confectionery shells (S) by means of at least one stamping element (11) and at least one transportable casting mould (1), in which at least one mould cavity (2) is provided, where at least the stamping element (11) and the casting mould (1) perform a stamping procedure by means of a moving device, during which the parts of a separable mould are brought together, and where confectionery mass (3) is filled into the mould cavity (2) and, prior to performance of the stamping procedure, a shell-like confectionery body (10) with a surplus of confectionery mass (3) is preformed, **characterised in that** the casting mould (1) is almost completely filled with confectionery mass (3) and, for the purpose of preforming the confectionery mass (3), subsequently rotated out of the position in space in which it was filled, in such a way that, under the effect of gravity, so much confectionery mass (3) is emptied out of the rotated casting mould (1) that at least such a quantity of partially crystallised confectionery mass (3) is left adhering to the surface (2a) of the mould cavity (2) as is required for the finished confectionery shell (S), **in that** the emptied casting mould (1) is rotated back, and **in that** the final inner contour of the confectionery shell (S) is moulded by the stamping procedure.

2. Method according to Claim 1, **characterised in that** the rotated casting mould (1) is set into centrifugal motion for the purpose of emptying out surplus confectionery mass (3).

3. Method according to Claim 1 or 2, **characterised in that** the centrifugal motion is executed in one plane on a circular path.

4. Method according to one of Claims 1 to 3, **characterised in that** the confectionery mass (3) located in the mould cavity (2) is degassed before being emptied out.

5. Method according to one of Claims 1 to 4, **characterised in that** a surplus portion of the confectionery mass (3) is displaced from the mould during the stamping procedure.

6. Method according to Claim 5, **characterised in that** the surplus portion of the confectionery mass (3) is transported away from the rim of the confectionery shell (S) and onto the upper side (1a) of the casting mould (1) surrounding the mould cavity (2), and **in that** the portion of the confectionery mass (3) transported out of the mould cavity (2) is separated from the confectionery mass (3) present within the mould.

7. Method according to Claim 5, **characterised in that** the surplus portion of the confectionery mass (3) is transported away from the rim of the confectionery shell (S) and onto the upper side (1a) of the casting mould (1) surrounding the mould cavity (2), and **in that** a connecting web (U) is produced between the displaced confectionery mass (3) and that present within the mould.

8. Method according to one of Claims 1 to 7, **characterised in that** the confectionery shell (S) is moulded in such a way that its rim is given an inward-facing, broken edge (K).

9. Method according to one of Claims 6 to 8, **characterised in that** the surplus portion of the confectionery mass (3) is removed from the upper side (1a) of the casting mould (1).

10. Method according to Claim 9, **characterised in that** the portion of the confectionery mass (3) removed from the upper side (1a) of the casting mould (1) is transported back into a facility provided for manufacturing the confectionery mass.

11. Method according to Claim 9 or 10, **characterised in that** the portion of the confectionery mass (3) displaced onto the upper side (1a) of the casting mould (1) is removed by a licking roller (6) rotating over the upper side (1a) of the casting mould (1), **in that** the confectionery mass (3) adheres to the rotating licking roller (6), and **in that** the adhering confectionery mass (3) is detached from the rotating licking roller (6).

12. Method according to one of Claims 9 to 11, **characterised in that** the confectionery mass (3) adhering to the upper side (1a) of the casting mould (1) as a result of the emptying procedure is removed before the stamping procedure is performed.

13. Moulding station for moulding confectionery shells (S), comprising at least one stamping element (11) and at least one transportable casting mould (1) with an upper side (1a) in which at least one mould cavity (2) is provided, where the stamping element (11) and the casting mould (1) can be moved towards each other, from a starting position (A) to an end position (E), for the purpose of creating a separable mould, and where a preforming device (V) for preforming a shell-like confectionery body is provided, such that a preformed confectionery body (10) can be manufactured before applying the stamping element (11), **characterised in that** the preforming device (V) is provided with a rotating device (W), **in that** the casting mould (1) can be rotated by the rotating device (W), out of the position in space in which it can be filled, in such a way that part of the confectionery mass (3) can be emptied out of the rotated casting mould (1) by the effect of gravity, and **in that** a reversing device (R) is provided, by means of which the emptied casting mould (1) can be rotated back.

14. Moulding station according to Claim 13, **characterised in that** a centrifuging device (5) is provided, by means of which the rotated casting mould (1) can be set into centrifugal motion in order to empty out surplus confectionery mass (3).

15. Moulding station according to Claim 13 or 14, **characterised in that** a degassing device (B) is provided, by means of which the confectionery mass (3) located in the mould cavity (2) can be degassed before being partially emptied out.

16. Moulding station according to Claim 15, **characterised in that** the degassing device (B) displays a degassing vibrator (b).

17. Moulding station according to one of Claims 13 to 16, **characterised in that** the stamping element (11) is provided with a separating device, by means of which surplus confectionery mass (3) can, during the stamping procedure, be separated from the quantity of confectionery mass (3) required in the mould for the finished confectionery shell.

18. Moulding station according to Claim 17, **characterised in that** the separating device displays a separating edge (11a) provided on the stamping element.

19. Moulding station according to one of Claims 13 to 18, **characterised in that** the stamping element (11) is provided with an edge-forming surface, by means of which a broken edge facing towards the interior of the confectionery shell can be produced on the rim of the confectionery shell.

20. Moulding station according to Claim 19, **characterised in that**, in the end position (E) of the stamping element (11) and the casting mould (1), a gap is provided between the edge of the mould cavity (2) and the edge-forming surface.

21. Moulding station according to one of Claims 13 to 20, **characterised in that** a removal device (6) is provided, by means of which surplus confectionery mass (3) that has got onto the upper side (1a) of the casting mould (1) can be removed from there.

22. Moulding station according to Claim 21, **characterised in that** the removal device (6) displays a licking roller (6a).

## Revendications

1. Procédé destiné à former des coques de confiseries (S) par le biais d'au moins un élément piston (11) et d'au moins un moule (1) apte à être convoyé et dans lequel est prévu une cavité (2) du moule, au moins l'élément piston (11) et le moule (1) faisant un mouvement de piston lors duquel est assemblé un moule séparable et lors duquel on fait couler dans la cavité (2) du moule la masse de confiseries (3), en préformant avant l'accomplissement du mouvement de piston un corps de confiseries (10) en forme d'une coque et avec d'un surplus de masse de confiseries (3), **caractérisé en ce qu'**on remplit le moule (1) presque complètement de la masse de confiseries (3) et après, en vue du préformage de la masse de confiseries (3), on tourne le moule de sa position dans l'espace, dans laquelle le moule a été rempli, de telle façon à faire écouler du moule (1) tourné et sous l'utilisation de la gravitation une quantité de la masse de confiseries (3) suffisamment grande pour faire adhérer à la surface (2a) de la cavité (2) du moule une masse de confiseries (3) partiellement cristallisée, au moins à une quantité nécessaire pour la coque finie de confiseries (S), **en ce qu'**on retourne le moule (1) vidé et **en ce qu'**on forme le contour intérieur fini des coques de confiseries (S) par le mouvement du piston.

2. Procédé selon la revendication 1, **caractérisé en ce qu'**en vue de l'écoulement de la masse excédentaire de confiseries (3), le moule tourné (1) est mis en mouvement centrifuge.

3. Procédé selon la revendication 1 ou 2, **caractérisé en ce que** le mouvement centrifuge est accomplit dans un plan sur une orbite.

4. Procédé selon l'une des revendications 1 à 3, **caractérisé en ce** qua la masse (3) de confiseries présente dans la cavité (2) du moule est dégazée avant sa vidange.

5. Procédé selon l'une des revendications 1 à 4, **caractérisé en ce que** lors du mouvement du piston, une partie excédentaire de la masse de confiseries (3) est déplacée du moule.

6. Procédé selon la revendication 5, **caractérisé en ce que** la partie excédentaire de la masse de confiseries (3) est transportée du bord de coque de la coque de confiseries (S) jusqu'à la surface supérieure (1a) du moule (1) environnant la cavité (2) du moule et **en ce que** la partie de la masse de confiseries (3) transportée hors de la cavité (2) du moule est séparée de la masse de confiseries (3) présente à l'intérieur du moule.

7. Procédé selon la revendication 5, **caractérisé en ce que** la partie excédentaire de la masse de confiseries (3) est transportée bu bord de coque de la coque (S) de confiseries jusqu'à la surface supérieure (1a) du moule (1) environnant la cavité (2) du moule et **en ce qu'**une traverse de liaison (U) est produite entre la masse de confiseries (3) déplacée et la masse de confiseries (3) présente à l'intérieur du moule.

8. Procédé selon l'une des revendications 1 à 7, **caractérise en ce que** la coque de confiseries (S) est moulée de telle façon que son bord de coque est donné un chanfreinage (K) orienté vers l'intérieur.

9. Procédé selon l'une des revendications 6 à 8, **caractérisé en ce que** la partie excédentaire de la masse de confiseries (3) est éliminée de la surface supérieure (1a) du moule (1).

10. Procédé selon la revendication 9, **caractérisé en ce que** la partie de la masse de confiseries (3) éliminée de la surface supérieure (1a) du moule (1) est retournée à une installation de production de masse de confiseries.

11. Procédé selon la revendication 9 ou 10, **caractérisé en ce que** la partie de la masse de confiseries (3) déplacée sur la surface supérieure (1a) du moule (1) est enlevée par un cylindre léchant (6) se tournant à travers de la surface supérieure (1a) du moule (1), que la masse de confiseries (3) reste adhérée au cylindre léchant (6) tournant, et **en ce que** la masse de confiseries (3) adhérant est décollée du cylindre léchant (6) tournant.

12. Procédé selon l'une des revendications 9 à 11, **caractérisé en ce que** la masse de confiseries (3) restant adhérée à la surface supérieure (1a) du moule (1), est éliminée avant le mouvement de piston étant effectué, à force de la vidange.

13. Station de formage des coques de confiseries (S), comportant au moins un élément piston (11) et au moins un moule (1) apte à être convoyer et ayant une surface supérieure (1a) avec au moins une cavité (2) du moule, l'élément piston (11) et le moule (1), en vue de produire un moule séparable, étant mobile l'un vers l'autre d'une position initiale (A) jusqu'à une position finale (E), et comportant un dispositif de préformation (V) destiné à la déformation d'un corps de confiseries en forme de coque, de telle façon qu'on peut produire un corps de confiseries (10) préformé, **caractérisée en ce que** le dispositif de préformation (V) comporte un dispositif de renversement (W), **en ce que** le moule (1), par le biais du dispositif de renversement (W), doit être tourner de la position dans l'espace, dans laquelle le moule peut être rempli, et de cette façon que sous l'utilisation de la force de gravité, une partie de la masse de confiseries (3) peut être enlevée du moule (1) tourné, et **en ce qu'**il est prévu un dispositif de retour (R) du renversement, au moyen duquel le moule (1) vidé peut être retourner.

14. Station de formage selon la revendication 13, **caractérisé en ce qu'**il est prévu un dispositif de centrifuge (5), par lequel le moule (1) tourné peut être mis en mouvement centrifuge en vue de la vidange de masse excédentaire de confiseries (3).

15. Station de formage selon la revendication 13 ou 14, **caractérisé en ce qu'**il est prévu un dispositif de dégazage (B), par la lequel la masse de confiseries (3) présente dans la cavité (2) du moule peut être dégazée avant la vidange partielle.

16. Station de formage selon la revendication 15, **caractérisée en ce que** le dispositif de dégazage (B) comporte un vibrateur de dégazage (b).

17. Station de formage selon l'une des revendications 13 á 16, **caractérisée en ce que** l'élément de piston (11) est muni d'un dispositif de séparation, par lequel, lors du mouvement de piston, la masse excédentaire de confiseries (3) peut être séparée de la masse de confiseries (3) nécessaire pour la coque finie de confiseries.

18. Station de formage selon la revendication 17, **caractérisée en ce que** le dispositif de séparation comporte une arête de séparation (11a) prévue sur l'élément piston.

19. Station de formage selon l'une des revendications 13 à 18, **caractérisée en ce que** l'élément piston (11) est muni d'une surface de formage d'arête apte à produire au bord de coque de la coque de confiseries un chanfreinage orienté vers l'intérieur de la coque de confiseries.

20. Station de formage selon la revendication 19, **caractérisée en ce que** dans la position finale (E) de l'élément piston (11) et du moule (1) une fente est prévue entre le bord de la cavité (2) du moule et la surface de formage d'arête.

21. Station de formage selon l'une des revendications 13 à 20, **caractérisée en ce qu'**il est prévu un dispositif d'enlèvement (6), par lequel la masse excédentaire de confiseries (3) qui est arrivée à la surface supérieure (1a) du moule (1) peut être éliminée de la surface supérieure.

22. Station de formage selon la revendication 21, **caractérisée en ce que** le dispositif d'enlèvement (6) comporte un cylindre léchant (6a).
